# EUROPEAN PATENT SPECIFICATION

(11) **EP 2 830 358 B1**
(45) Date of publication and mention of the grant of the patent: **17.07.2019**
(21) Application number: 13306078.0
(22) Date of filing: 25.07.2013
(51) Int. Cl.: H04W 24/10, H04W 36/20, H04W 84/04, H04W 24/02

(54) **Evaluation whether a not activated small cell should be activated to serve user equipment**
Beurteilung, ob eine nicht aktivierte Kleinzelle aktiviert werden sollte, um ein Benutzergerät zu bedienen
Évaluation si une petite cellule non activée doit être activée pour servir un équipement utilisateur

(43) Date of publication of application: 28.01.2015
(73) Proprietor: Alcatel Lucent, 91620 Nozay (FR)
(72) Inventor: Stanze, Oliver, 70435 STUTTGART (DE); Doetsch, Uwe, 70435 STUTTGART (DE)
(74) Representative: Novagraaf Technologies

(56) References cited:
- EP-A1- 2 533 595
- US-A1- 2011 086 641
- US-A1- 2013 017 820
- US-A1- 2013 077 507
- "LTE; Evolved Universal Terrestrial Radio Access (E-UTRA); Potential solutions for energy saving for E-UTRAN (3GPP TR 36.927 version 11.0.0 Release 11)", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 3, no. V11.0.0, 1 October 2012 (2012-10-01), XP014074985,
- NOKIA SIEMENS NETWORKS: "On TDM eICIC Coordination for Macro+Pico Cases", 3GPP DRAFT; R3-102817 PICOMACRO_TDMEICICCOORD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 2 October 2010 (2010-10-02), XP050453624, [retrieved on 2010-10-02]

## Description

### FIELD OF THE INVENTION

The invention relates to methods of evaluation whether a not activated small cell should be activated to serve one or more user equipment devices, to macro cells, small cells and user equipment devices participating in the implementation of these evaluation methods, as well as specific communication messages exchanged during implementation of these evaluation methods.

### BACKGROUND OF THE INVENTION

In wireless networks, there is a need to absorb the increasing amount of wireless broadband traffic, without requiring establishment of new macro cells in this wireless network. The preferred use of heterogeneous networks, also called HetNets, is a potential solution to handle this increasing amount of wireless broadband traffic. Heterogeneous networks are based on the introduction of small cells under the coverage of a macro cell layer. Because of obvious energy reasons, such a small cell should only be activate if it is effectively needed, for instance if there are active user equipment devices inside the coverage area of this small cell and/or if the current load in the wireless network cannot be handled by the other active macro cells.

It is quite easy to decide whether a given small cell should be deactivated. Indeed, this given small cell should be deactivated for instance if there is no active user equipment device or if there is not enough free capacity in the macro cell layer. On the contrary, it is a not that easy to decide whether a given small cell should be activated, because it is not clear which active user equipment devices might effectively be served by the newly activated small cell. Therefore, in the art several methods are contemplated to detect whether a certain user equipment device might be served, or not, by a small cell which is currently not active.

In a prior art described in section 6.1.2.2 in of the document "3GPP TR 36.927, Potential solutions for energy saving for E-UTRAN, V11.0.0, September 2012", several methods are contemplated to be able to determine how a not active small cell is to exit its dormant mode efficiently, which also means when such a not active small cell should be activated.

A type of contemplated solution, called "approach A", works as follows. There are low-load periods predefined by the Operation Administration and Management layer of the wireless network which are based on daytime load profiles. Thanks to these daytime load profiles, it is estimated which not activated small cell will serve the highest load and this not activated small cell is then activated. A drawback of this approach is based on the fact that this is a statistical approach which indeed does not consider the real situation in the wireless network. There is therefore a high risk for suboptimal decisions with respect to efficient offload of excess traffic. This approach is indeed not effective.

A type of contemplated solution, called "approach B", works as follows. Not active small cells temporary perform Interference over Thermal measurements of user equipment devices uplink transmissions. A drawback of this approach is based on the fact that it implements only uplink measurements of the user equipment devices. Since there is a high uplink and downlink imbalance in wireless heterogeneous networks, it is hard to estimate the situation for the downlink aspect from only uplink measurements, in a relevant way for the cell association between a user equipment device and a small cell, after the activation of this small cell. The lack of symmetry in this approach makes it rather haphazard.

A type of contemplated solution, called "approach D", works as follows, essentially relying on relative position information about the elements of the wireless network. Merely based on information regarding the user equipment devices location and the location of the small cells, it is decided which small cells should be activated to serve which user equipment device. A drawback of this approach is based on the fact that it requires information regarding the user equipment devices location, for instance Global Position System (GPS) information. This permanent determination and reporting of this location information stresses the limited user equipment device energy capacity and besides will not work in a reliable way in indoor scenarios. This approach appears as somewhat too complex.

A type of contemplated solution, called "approach C", works as follows, essentially based on measurements performed by the user equipment devices. Not active small cells are activated but only to transmit reference signals which enable the user equipment device to perform downlink measurements and to report them to its serving macro cell.

This approach is the only approach which is based on real downlink conditions after the activation of a small cell. Therefore it has a much lower risk for suboptimal decisions with respect to efficient offload of excess traffic. There is still a drawback in this approach, which is an unnecessary high interference towards the macro cell. Indeed, the small cell transmits all its reference symbols. Therefore, for user equipment devices which are quite close to the small cell, but still served by the macro cell, there will be high interference especially on the physical control layer (PDCCH) where the pilot density is quite high. To decide whether a user equipment device might be served by a certain small cell, estimation of the path loss or of the signal to interference plus noise ratio (SINR) is required. This estimation is similar to Reference Signals Received Power and Reference Signals Received Quality (RSRP/RSRQ) measurements which are performed in current Long Term Evolution (LTE) standard. A drawback of this approach is based on the fact that it presents a high level of interference.

In the prior art, document EP 2 533 595 A1 discloses apparatuses and methods for inter-cell interference coordination and document US 2013/077507 A1 discloses a method and system for small cell discovery in heterogeneous cellular networks.

### SUMMARY OF THE INVENTION

The object of the present invention is to alleviate at least partly the above mentioned drawbacks by the method of claim 1 and by the small cell of claim 13 in the wireless network of claim 12.

More particularly, the invention aims to provide a reliable evaluation method to decide, whether a given user equipment device may be served by a given currently not active small cell, and whether this small cell should therefore be activated. The evaluation method proposed by embodiments of the invention aims at a higher efficiency, at less interference and at avoiding suboptimal small cell activation decisions.

Embodiments of the invention propose an evaluation method to detect whether a given user equipment device may be served by a given currently not activated small cell if this small cell were to be activated. This evaluation method then requires some synchronization between the serving macro call and the targeted small cell. This evaluation method will be performed if a network component detects a load situation which requires the activation of an additional small cell.

This object is achieved with a method of evaluation, in a wireless network comprising macro cells, small cells and user equipment devices, whether a given not active small cell should be activated to serve one or more user equipment devices or not, comprising therefore performing a given measurement by said one or more user equipment devices on said small cell transmission, wherein it also comprises dedicating a resources set to said small cell transmission only, thereby excluding macro cell transmission on said resources set, during said measurement performing.

This object is also achieved with a macro cell in a wireless network comprising macro cells, small cells and user equipment devices, adapted to evaluate whether a given not active small cell should be activated to serve one or more user equipment devices or not, depending on result of a given measurement performed by said one or more user equipment devices on said small cell transmission, wherein it is also adapted to dedicate a resources set to said small cell transmission only, thereby not transmitting on said resources set, during said measurement performing.

This object is also achieved with a small cell in a wireless network comprising macro cells, small cells and user equipment devices, adapted, when not active, to receive a dedicated resources set and to only transmit on said dedicated resources set, so long as a given measurement is performed by one or more user equipment devices on said small cell transmission, result of which performed measurement will be used to evaluate whether said not active small cell should be activated to serve said one or more user equipment devices or not.

Preferred embodiments comprise one or more of the following features, which can be taken separately or together, either in partial combination or in full combination.

Preferably, said resources set is orthogonal to the other resources used by macro cell for transmission. That way, not only is interference between macro cell and small cell limited, but also indeed deeply reduced, if not practically cancelled.

Preferably, said small cell wirelessly transmits reference signals on which said user equipment devices perform downlink measurement and report result of said performed downlink measurement to their respective serving macro cell. This approach allows for "real conditions" downlink measurements. Therefore it is unlikely to lead to suboptimal decisions.

Preferably, said performed measurement comprises down link path loss measurements, which are preferably reference signals received power measurement and reference signals received quality measurement for Long Term Evolution network. That way, the user equipment devices can perform more efficiently their "real conditions" downlink measurements.

Preferably, not all pilots of said reference signals are transmitted and/or pilots of said reference signals are not transmitted in all subframes, preferably less than 20% of said reference signals are transmitted, more preferably not more than 10% of said reference signals are transmitted. Therefore resources, dedicated to this evaluation method, are saved. Besides, interference is still reduced, because of very limited amount of transmitted data.

Indeed, it is not required to transmit all reference symbols of the entire frequency band in all subframes; on the contrary, some frequency in only part of the subframes will be sufficient. Preferably, transmitted reference signals are not sent in more than 10% of the bandwidth of the whole carrier. Preferably, in Long Term Evolution network, only not more than every 6 subcarriers are transmitted, and/or said reference signals are transmitted in not more than every 5 subframes, preferably in not more than every 10 subframes, and/or reference signals are transmitted after symbol 3, preferably in symbols 4, 5 or 6.

Preferably, said dedicating resources set at least comprises a step of defining said resources set, and preferably a step of signaling said resources set to said user equipment devices, and preferably a step of signaling said resources set to said small cell, and preferably a step of signaling said resources set to said macro cell when said resources set is not dedicated by said macro cell. That way, every network element which needs to know about the dedicated resources set is sure to be fully aware of it, right from the beginning of the evaluation method.

Preferably, a result of said measurement performed by said user equipment device is either directly reported to serving macro cell of said user equipment device or a report of a result of said measurement performed by said user equipment device is triggered if said result is above a given relative threshold between said measurement performed for said not active small cell and said measurement performed for serving macro cell of said user equipment device. That way, if the result of performed measurement is too bad, it is not even reported to serving macro cell. This saves resources and still lessens interference, because of the lowest quantity of transmitted data during performance of the evaluation method. Preferably, said relative threshold is not more than 6dB, preferably not more than 9dB, more preferably not more than 12dB. This important relative threshold allows for using a small cell, even if transmission is suboptimal, provided it is sufficient. Therefore, one does not wait for excellent transmission to offload excess traffic from macro cell to small cell, but only for acceptable transmission.

Preferably, depending on the value of a result of said performed measurement, serving macro cell of said user equipment having performed said measurement takes a decision of virtual handover from said serving macro cell to said not active small cell. Indeed, the value of the downlink measurements performed by user equipment device, which has been reported to macro cell, is sufficient for the decision to be taken by macro cell.

Preferably, said wireless network is a wireless heterogeneous network.

Preferably, said signaling steps are using an X2 interface of said wireless network to perform said signaling.

Preferably, said wireless network is a Long Term Evolution network also called LTE network or includes a Long Term Evolution network also called LTE network.

Preferably, said macro cell is an eNodeB.

Preferably, said signaling to user equipment devices is performed via Radio Resource Control (RRC) signaling or via broadcast or via multicast.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows an example of wireless heterogeneous network in which a method of evaluation according to an embodiment of the invention may be implemented.
Fig. 2 shows an example of the different steps of a method of evaluation according to an embodiment of the invention.

### DETAILED DESCRIPTION OF THE INVENTION

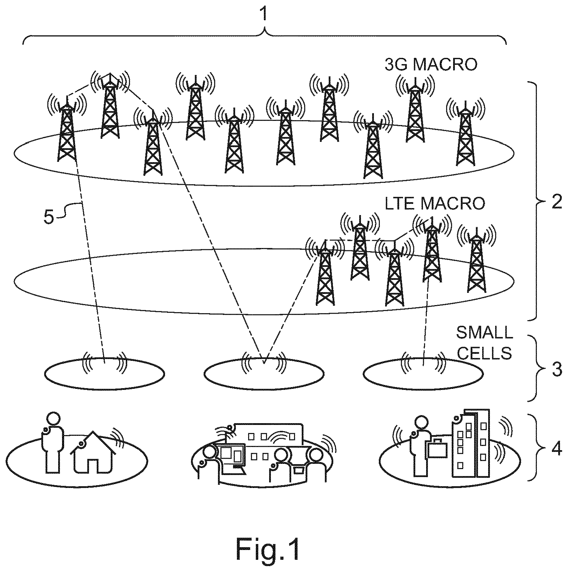

Fig. 1 shows an example of wireless heterogeneous network in which a method of evaluation according to an embodiment of the invention may be implemented. A wireless heterogeneous 1 comprises macro cells 2 in a macro cell layer, small cells 3 in a small cell layer, user equipment devices 4 in a user equipment device layer. Macro cell layer may comprise 3G macro cells 2 and/or LTE macro cells. Small cell layer may comprise small cells 3. User equipment device layer may comprise many types of user equipment among which mobile phones and computers wirelessly connected, and any other type of portable communicating devices. An example of data transmission 5 throughout the wireless network 1 is also shown.

A wireless heterogeneous network 1 is a wireless network connecting user equipment devices 4 together through different protocols, for instance either 3G or LTE. The wireless heterogeneous network 1 provides for interoperation between network elements 2, 3 and 4, among which there are macro cells 2, small cells 3. These network elements 2 and 3 are used together to provide a different levels of coverage, with handoff capability between those network elements 2 and 3.

A small cell 3 is a low-power wireless access point that operates in licensed spectrum or in unlicensed spectrum. The small cell 3 preferably has a range between 10 meters and 100 meters. The small cell 3 preferably is operator managed and features edge-based intelligence. A small cell 3 presents the interest of being able to offload traffic from the macro cells 2 level, while increasing available wireless network 1 capacity without requiring any deployment of new macro cells 2.

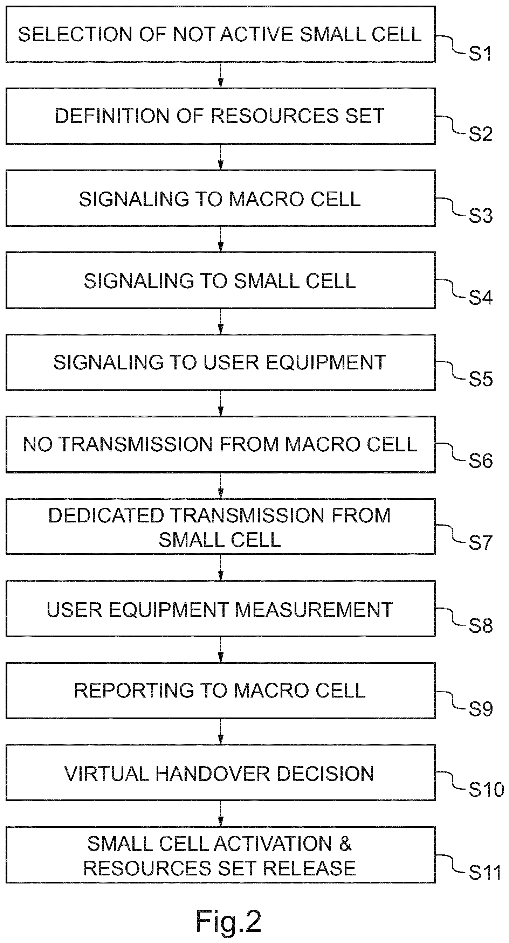

Fig. 2 shows an example of the different steps of a method of evaluation according to an embodiment of the invention. This evaluation method includes several steps, preferably performed successively, among which a step S1 of selection of not active small cell, a step S2 of definition of resources set, a step S3 of signaling to macro cell, a step S4 of signaling to small cell, a step S5 of signaling to user equipment, a step S6 of no transmission from macro cell, a step S7 of dedicated transmission from small cell, a step S8 of user equipment measurement, a step S9 of reporting to macro cell, a step S10 of virtual handover decision, a step S11 of effective handover.

In a step S1 of selection of not active small cell 3, a specific not active small cell 3 which is a candidate for serving at least one user equipment device 4 is selected, in order to evaluate whether it effectively should or not serve this user equipment device 4.

In a step S2 of definition of resources set, a resources set for user equipment device 4 measurements is defined. This defined resources set contains detailed time and frequency information, for example the specific subcarriers, the specific symbol and the specific subframes which will be used. For example only 6 subcarriers are used for transmission, and only the symbol 4 or the symbol 5 or the symbol 6 is used for transmission, and only one subframe out of 10 subframes is used for transmission, of the reference signals. This resources set may be dynamically defined by the macro cell 3 or by any other network component or may be configured by the Operation Administration and Management layer of the wireless network 1. If this evaluation method is not executed, then the defined resources set has no special meaning and the corresponding resources of this resources set are handled as normal resources by the macro cell 3. So, if the method is not executed, there is indeed no additional overhead.

In a step S3 of signaling to macro cell, messages are sent via an interface or via a proprietary interface to macro cell 2. This interface may be an X2 interface when messages are sent from an eNodeB to another eNodeB. These messages contain information regarding the defined resources set. If the orthogonal resources are configured by the Operation Administration and Management layer of the wireless network 1, these messages only inform the involved macro cell 2 about the start of this evaluation method. If the macro cell 2 defines this resources set, of course no message needs to be sent to this macro cell 2.

In a step S4 of signaling to small cell, the messages are sent via an X2 interface or via a proprietary interface to small cell 3.

In a step S5 of signaling to user equipment, macro signals resources set is sent to user equipment devices 4. This may be either done on a per user equipment device 4 basis, for instance via Radio Link Control signaling, or to all user equipment devices 4 simultaneously via broadcast or via multicast. Steps 3, 4 and 5 may be interchanged with one another.

In a step S6 of no transmission from macro cell, all the time that this evaluation method is executed, the macro cell 2 does not transmit on the resources defined in the dedicated resources set. All other resources, different from the dedicated resources set, are used by the macro cell 2, as usual.

In a step S7 of dedicated transmission from small cell, the small cell 3 only transmits on the resources of the resources set, in the dedicated reference symbols. The small cell 3 only transmits on the resources of the resources set, so long as a given measurement is performed (S8) by one or more user equipment devices (4) on said small cell (3) transmission (S7). After such given measurement is ended, this dedicated resources set will be released as explained hereafter. The reference signals are sent only during a specific period. All other resources, different from the dedicated resources set, are not used by the small cell 3. Preferably, orthogonal resources are defined so as to practically avoid interference between macro cell 2 and small cell 3. Small cell 3 may be for example a Pico cell. Additionally, since the resources set is advantageously limited to a minimum amount of the resources, instead of requiring transmission of all pilots in all sub frames, interference is still lessened.

In a step S8 of user equipment measurement, the user equipment device 4 has been informed regarding the resources set on which the small cell 3 will transmit. So, based on these resources set, the user equipment device 4 performs a measurement which reflects the path loss or the Signal to Interference plus Noise Ratio situation if the small cell 3 were to be activated and if the user equipment device 4 were to be served by this activated small cell 3. The performed measurement is comparable to Reference Signals Received Power / Reference Signals Received Quality measurements already performed in the current Long Term Evolution standard, but those measurements are only performed for the limited number of reference signals which have been sent by the small cell 3. The result of those measurements is a determined value to be reported to the macro cell.

In a step S9 of reporting to macro cell, the result of those measurements performed in step S8 is a determined value which is either directly reported to the macro cell 2 or indirectly via a trigger if the value is above a certain predetermined relative threshold. In more detail, this result of the measurement performed by the user equipment device 4 is either directly reported to serving macro cell 2 of the user equipment device 4 or, as an alternative useful to save energy, a report of the result of the measurement performed by the user equipment device 4 is triggered if and only if this result is above a given relative threshold between measurement performed for not active small cell 3 and measurement performed for serving macro cell 2 of the user equipment device 4. Advantageously, this relative threshold is about 6dB.

In a step S10 of virtual handover decision, the macro cell 2 now has all necessary information to decide whether the user equipment device 4 could or should perform a handover to the small cell 3. Because this targeted small cell 3 is not yet activated, this decision does not result in a real and effective handover. The result of this step S10 of virtual handover is the result of the complete evaluation method. The information, whether a given user equipment device 4 may be served by a currently not activated small cell 3 if this small cell 3 would be activated, is given to the network component which is indeed responsible for the activation of a small cell 3, so which is indeed responsible for performing an effective handover. This component, responsible for performing an effective handover, is the load balancing.

In a step S11 of small cell 3 activation and of resources set release, the small cell 3 is effectively activated in order to serve the user equipment device 4. The dedicated resources set, now being useless, is released. Afterwards, an effective handover will be performed, by the load balancing in the wireless network 1, of the user equipment device 4 from the macro cell 2 to the small cell 3.

Besides, in the case where the user equipment 4 is not able to measure or in the case where the user equipment 4 has performed a measurement which is below the predetermined threshold, the dedicated resources set should be released too. Two options can be contemplated. In a first option, it was agreed from the beginning that the resources set was dedicated only for a predetermined duration of time, and this resources set is automatically released when this duration of time has expired. In as second option, after expiration of this duration of time without any measurement related to the small cell 3 being reported by the user equipment 4, the macro cell 2 is signaling a resource release message to release the dedicated resources set.

The invention has been described with reference to preferred embodiments.

## Claims

1. A method of evaluation to decide small cell (3) activation, suitable for use in a wireless network (1) comprising macro cells (2), small cells (3) and at least one user equipment device (4), where, in said wireless network (1), at least one not active small cell (3) is arranged capable of activation to serve one or more user equipment devices (4), the method comprising the steps of
dedicating (S2, S3, S4, S5) a resources set to reference signals transmitted by the at least one not active small cell (3) only, by a component of the wireless network (1), namely a first network component, or at least one macro cell (2) or an Operation Administration and Management layer of the wireless network,
performing (S8) a given measurement by said one or more user equipment devices (4) on said reference signals transmitted by the at least one not active small cell (3),
determining (S9) if the given measurement is above a predetermined threshold: and, if so,
deciding a virtual handover (S10) of the user equipment device (4) to the at least one not active small cell (3), said virtual handover not resulting in an activation of said small cell (3), by the at least one macro cell (2) and giving the decision to a network component responsible for the activation of said small cell (3), namely a second network component,
activating and handing over to the small cell (3), by the second network component by load balancing in the wireless network (1), of the at least one user equipment device (4) from the macro cell (2) to the activated small cell (3), and releasing the resources set dedicated to transmit the reference signals transmitted by the small cell, based on the virtual handover.

2. A method of evaluation according to claim 1, wherein said resources set is orthogonal to the other resources used by macro cell (2) for transmission.

3. A method of evaluation according to any of preceding claims, wherein the transmission of reference signals comprises :-
wirelessly transmitting (S7), by said small cell (3), said reference signals on which said user equipment devices (4) perform downlink measurement (S8) and report (S9) the result of said performed downlink measurement, namely the given measurement, to their respective serving macro cell (2).

4. A method of evaluation according to claim 3, wherein said performed downlink measurement comprises down link path loss measurements.

5. A method of evaluation according to any of claims 3 to 4, wherein not all said reference signals are transmitted and/or said reference signals are not transmitted in all subframes.

6. A method of evaluation according to any of claims 3 to 5, wherein said transmitted reference signals are not sent in more than 10% of the bandwidth of the whole carrier.

7. A method of evaluation according to any of preceding claims, wherein said dedicating (S2, S3, S4, S5) a resources set at least comprises a step of defining (S2) said resources set, and a step of signaling (S5) said resources set to said user equipment devices (4), and a step of signaling (S4) said resources set to said small cell (3), and a step of signaling (S3) said resources set to said macro cell (2) when said resources set is not dedicated by said macro cell (2).

8. A method of evaluation according to any of preceding claims, wherein a result of said measurement performed by said user equipment device (4) is either directly reported (S9) to serving macro cell (2) of said user equipment device (4) or a report of a result of said measurement performed (S9) by said user equipment device (4) is triggered if said result is above a given relative threshold between said measurement performed for said not active small cell (3) and said measurement performed for serving macro cell (2) of said user equipment device (4).

9. A method of evaluation according to claim 8, wherein said relative threshold is not more than 6dB.

10. A method of evaluation according to any of preceding claims, wherein, depending on the value of a result of said performed measurement, serving macro cell (2) of said user equipment (4) having performed said measurement takes a decision of virtual handover (S10) from said serving macro cell (2) to said not active small cell (3).

11. A method of evaluation according to any of preceding claims, wherein said wireless network (1) is a wireless heterogeneous network.

12. A wireless network (1) comprising macro cells (2), small cells (3) and user equipment devices (4), further comprising a second network component responsible for the activation of at least one not active small cell (3), adapted to evaluate whether the at least one not active small cell (3) should be activated to serve one or more user equipment devices (4) or not, depending on result of a given measurement performed (S8) by said one or more user equipment devices (4) on reference signals transmitted by the at least one not active small cell (3), wherein a first network component or at least one macro cell (2) or an Operation Administration and Management layer of the wireless network is adapted to dedicate (S2, S3, S4, S5) a resources set to reference signals transmitted by the at least one not active small cell (3) only,
the at least one macro cell (2) being also configured, if the measurements are above a predetermined threshold to decide a virtual handover of at least one user equipment device (4) to the at least one not active small cell (3), said virtual handover not resulting in an activation of said small cell (3); said second network component activating and handing over to the small cell (3), by load balancing in the wireless network (1), of the at least one user equipment device (4) from the macro cell (2) to the activated small cell (3), and releasing the resources set dedicated to transmit the reference signals transmitted by the small cell, based on the virtual handover.

13. A small cell (3) suitable for a wireless network (1) as claimed in claim 12, suitable for activation by the second network component and arranged to transmit, when not active, the reference signals associated with the resources set during the measurement.

## Patentansprüche

1. Verfahren zur Beurteilung, eine Aktivierung einer Kleinzelle (3) zu entscheiden, die zur Verwendung in einem drahtlosen Netz (1) geeignet ist, umfassend Makrozellen (2), Kleinzellen (3) und mindestens eine Benutzerausrüstungsvorrichtung (4), wobei, in dem drahtlosen Netz (1), mindestens eine nicht aktive Kleinzelle (3) angeordnet ist, die zur einer Aktivierung in der Lage ist, um eine oder mehrere Benutzerausrüstungsvorrichtungen (4) zu bedienen, wobei das Verfahren die Schritte umfasst:
Dedizieren (S2, S3, S4, S5) eines Ressourcensatzes für Referenzsignale, die nur von der mindestens einen nicht aktiven Kleinzelle (3) gesendet werden, durch eine Komponente des drahtlosen Netzes (1), nämlich eine erste Netzkomponente, oder eine Makrozelle (2) oder eine Betriebsverwaltungs- und Managementschicht des drahtlosen Netzes;
Vornehmen (S8) einer gegebenen Messung durch die eine oder die mehreren Benutzerausrüstungsvorrichtungen (4) an den Referenzsignalen, die von der mindestens einen nicht aktiven Kleinzelle (3) gesendet werden;
Bestimmen (S9), ob die gegebene Messung über einer vorherbestimmten Schwelle liegt; und, wenn ja, Entscheiden einer virtuellen Übergabe (S10) der Benutzerausrüstungsvorrichtung (4) an die mindestens eine nicht aktive Kleinzelle (3), wobei die virtuelle Übergabe nicht zu einer Aktivierung der Kleinzelle (3) führt, durch die mindestens eine Makrozelle (2), und Erteilen der Entscheidung an eine Netzkomponente, die für die Aktivierung der Kleinzelle (3) verantwortlich ist, nämlich eine zweite Netzkomponente;
Aktivieren und Übergeben an die Kleinzelle (3), durch die zweite Netzkomponente durch einen Lastausgleich in dem drahtlosen Netz (1), der mindestens einen Benutzerausrüstungsvorrichtung (4) von der Makrozelle (2) an die aktivierte Kleinzelle (3), und Freigeben des Ressourcensatzes, der dediziert ist, um die Referenzsignale zu senden, die von der Kleinzelle gesendet werden, auf der Basis der virtuellen Übergabe.

2. Beurteilungsverfahren nach Anspruch 1,
wobei der Ressourcensatz orthogonal zu anderen Ressourcen ist, die von der Makrozelle (2) zum Senden verwendet werden.

3. Beurteilungsverfahren nach einem der vorhergehenden Ansprüche,
wobei das Senden von Referenzsignalen umfasst:
drahtloses Senden (S7), durch die Kleinzelle (3), der Referenzsignale, an denen die Benutzerausrüstungsvorrichtungen (4) die Downlink-Messung (S8) vornehmen, und das Ergebnis der vorgenommenen Downlink-Messung, nämlich der gegebenen Messung, an ihre jeweilige bedienende Makrozelle (2) berichten (S9).

4. Beurteilungsverfahren nach Anspruch 3,
wobei die vorgenommene Downlink-Messung Downlink-Wegverlustmessungen umfasst.

5. Beurteilungsverfahren nach einem der Ansprüche 3 bis 4,
wobei nicht alle Referenzsignale gesendet werden und/oder die Referenzsignale nicht in allen Teilrahmen gesendet werden.

6. Beurteilungsverfahren nach einem der Ansprüche 3 bis 5,
wobei die gesendeten Referenzsignale nicht in mehr als 10 % der Bandbreite des gesamten Trägers gesendet werden.

7. Beurteilungsverfahren nach einem der vorhergehenden Ansprüche,
wobei das Dedizieren (S2, S3, S4, S5) eines Ressourcensatzes mindestens umfasst: einen Schritt des Definierens (S2) des Ressourcensatzes, und einen Schritt des Signalisierens (S5) des Ressourcensatzes für die Benutzerausrüstungsvorrichtungen (4), und einen Schritt des Signalisierens (S4) des Ressourcensatzes an die Kleinzelle (3), und einen Schritt des Signalisierens (S3) des Ressourcensatzes an die Makrozelle (2), wenn der Ressourcensatz nicht von der Makrozelle (2) dediziert wird.

8. Beurteilungsverfahren nach einem der vorhergehenden Ansprüche,
wobei ein Ergebnis der Messung, die von der Benutzerausrüstungsvorrichtung (4) vorgenommen wird, entweder direkt an die bedienende Makrozelle (2) der Benutzerausrüstungsvorrichtung (4) berichtet wird (S9), oder ein Bericht eines Ergebnisses der Messung, die von der Benutzerausrüstungsvorrichtung (4) vorgenommen wird (S9), ausgelöst wird, wenn das Ergebnis über einer gegebenen relativen Schwelle zwischen der Messung, die für die nicht aktive Kleinzelle (3) vorgenommen wird, und der Messung, die für die bedienende Makrozelle (2) der Benutzerausrüstungsvorrichtung (4) vorgenommen wird, liegt.

9. Beurteilungsverfahren nach Anspruch 8,
wobei die relative Schwelle nicht mehr als 6 dB beträgt.

10. Beurteilungsverfahren nach einem der vorhergehenden Ansprüche,
wobei, in Abhängigkeit von dem Wert eines Ergebnisses der vorgenommenen Messung, die bedienende Makrozelle (2) der Benutzerausrüstungsvorrichtung (4), welche die Messung vorgenommen hat, eine Entscheidung der virtuellen Übergabe (S10) von der bedienenden Makrozelle (2) an die nicht aktive Kleinzelle (3) trifft.

11. Beurteilungsverfahren nach einem der vorhergehenden Ansprüche,
wobei das drahtlose Netz (1) ein drahtloses heterogenes Netz ist.

12. Drahtloses Netz (1), umfassend Makrozellen (2), Kleinzellen (3) und Benutzerausrüstungsvorrichtungen (4), ferner umfassend eine zweite Netzkomponente, die für die Aktivierung der mindestens einen nicht aktiven Kleinzelle (3) verantwortlich ist, und die geeignet ist zu beurteilen, ob die mindestens eine nicht aktive Kleinzelle (3) aktiviert werden sollte, um eine oder mehrere Benutzerausrüstungsvorrichtungen (4) zu bedienen, oder nicht, in Abhängigkeit von einem Ergebnis einer gegebenen Messung (S8), welche durch die eine oder die mehreren Benutzerausrüstungsvorrichtungen (4) an Referenzsignalen vorgenommen wird, die von der mindestens einen nicht aktiven Kleinzelle (3) gesendet werden, wobei eine erste Netzkomponente oder mindestens eine Makrozelle (2) oder eine Betriebsverwaltungs- und Managementschicht des drahtlosen Netzes geeignet ist, einen Ressourcensatz für Referenzsignale zu dedizieren (S2, S3, S4, S5), die nur von der mindestens einen nicht aktiven Kleinzelle (3) gesendet werden, wobei die mindestens eine Makrozelle (2) auch ausgelegt ist, wenn die Messungen über einer vorherbestimmten Schwelle liegen, eine virtuelle Übergabe der mindestens einen Benutzerausrüstungsvorrichtung (4) an die mindestens eine nicht aktive Kleinzelle (3) zu entscheiden, wobei die virtuelle Übergabe nicht zu einer Aktivierung der Kleinzelle (3) führt;
wobei die zweite Netzkomponente die Kleinzelle (3) aktiviert und an diese übergibt, durch einen Lastausgleich in dem drahtlosen Netz (1), der mindestens einen Benutzerausrüstungsvorrichtung (4) von der Makrozelle (2) an die aktivierte Kleinzelle (3), und den Ressourcensatz freigibt, der dediziert ist, um die Referenzsignale zu senden, die von der Kleinzelle gesendet werden, auf der Basis der virtuellen Übergabe.

13. Kleinzelle (3), welche für ein drahtloses Netz (1) geeignet ist, wie in Anspruch 12 beansprucht, und welche für eine Aktivierung durch die zweite Netzkomponente geeignet ist und eingerichtet ist, wenn sie nicht aktiv ist, die Referenzsignale, die mit dem Ressourcensatz assoziiert sind, während der Messung zu senden.

## Revendications

1. Procédé d'évaluation pour décider d'une activation de petite cellule (3), approprié pour être utilisé dans un réseau sans fil (1) comprenant des macro cellules (2), des petites cellules (3) et au moins un dispositif d'équipement utilisateur (4), où, dans ledit réseau sans fil (1), au moins une petite cellule non active (3) est conçue de sorte à pouvoir être activée pour servir un ou plusieurs dispositifs d'équipement utilisateur (4), le procédé comprenant :
l'étape d'attribution (S2, S3, S4, S5) d'un ensemble de ressources à des signaux de référence transmis par la ou les petites cellules non actives (3) seulement, par un composant du réseau sans fil (1), à savoir un premier composant de réseau, ou au moins une macro cellule (2) ou une couche d'administration et de gestion d'opération du réseau sans fil,
l'étape de réalisation (S8) d'une mesure donnée par ledit ou lesdits dispositifs d'équipement utilisateur (4) sur lesdits signaux de référence transmis par la ou les petites cellules non actives (3),
l'étape de détermination (S9) pour savoir si la mesure donnée est supérieure à un seuil prédéterminé ; et, si tel est le cas,
l'étape de décision d'un transfert intercellulaire virtuel (S10) du dispositif d'équipement utilisateur (4) à la ou aux petites cellules non actives (3), ledit transfert intercellulaire virtuel n'entraînant pas une activation de ladite petite cellule (3), par la ou les macro cellules (2) et rendant une décision à un composant de réseau responsable de l'activation de ladite petite cellule (3), à savoir un second composant de réseau,
l'étape d'activation de la petite cellule (3)et de transfert intercellulaire à cette dernière, par le second composant de réseau par un équilibrage de charge dans le réseau sans fil (1), du ou des dispositifs d'équipement utilisateur (4) de la macro cellule (2) à la petite cellule activée (3) et par libération de l'ensemble de ressources dédié à la transmission des signaux de référence transmis par la petite cellule en se basant sur le transfert intercellulaire virtuel.

2. Procédé d'évaluation selon la revendication 1, dans lequel ledit ensemble de ressources est orthogonal à d'autres ressources utilisées par une macro cellule (2) pour une transmission.

3. Procédé d'évaluation selon l'une quelconque des revendications précédentes, dans lequel la transmission de signaux de référence comprend :
la transmission sans fil (S7), par ladite petite cellule (3), desdits signaux de référence sur lesquels lesdits dispositifs d'équipement utilisateur (4) effectuent une mesure de liaison descendante (S8) et rapportent (S9) le résultat de ladite mesure de liaison descendante effectuée, à savoir la mesure donnée, à leur macro cellule de desserte respective (2).

4. Procédé d'évaluation selon la revendication 3, dans lequel ladite mesure de liaison descendante effectuée comprend des mesures de perte de trajet de liaison descendante.

5. Procédé d'évaluation selon l'une quelconque des revendications 3 et 4, dans lequel les signaux de référence ne sont pas tous transmis et/ou lesdits signaux de référence ne sont pas transmis dans toutes les sous-trames.

6. Procédé d'évaluation selon l'une quelconque des revendications 3 à 5, dans lequel lesdits signaux de référence transmis ne sont pas envoyés dans plus de 10 % de la largeur de bande de toute la porteuse.

7. Procédé d'évaluation selon l'une quelconque des revendications précédentes, dans lequel ladite attribution (S2, S3, S4, S5) d'un ensemble de ressources comprend au moins une étape de définition (S2) dudit ensemble de ressources et une étape de signalisation (S5) dudit ensemble de ressources auxdits dispositifs d'équipement utilisateur (4) et une étape de signalisation (S4) dudit ensemble de ressources à ladite petite cellule (3) et une étape de signalisation (S3) dudit ensemble de ressources à ladite macro cellule (2) lorsque ledit ensemble de ressources n'est pas attribué par ladite macro cellule (2).

8. Procédé d'évaluation selon l'une quelconque des revendications précédentes, dans lequel un résultat de ladite mesure effectuée par ledit dispositif d'équipement utilisateur (4) est soit directement rapporté (S9) à une macro cellule de desserte (2) dudit dispositif d'équipement utilisateur (4), soit un rapport d'un résultat de ladite mesure effectuée (S9) par ledit dispositif d'équipement utilisateur (4) est déclenché si ledit résultat est supérieur à un seuil relatif donné entre ladite mesure effectuée pour ladite petite cellule non active (3) et ladite mesure effectuée pour une macro cellule de desserte (2) dudit dispositif d'équipement utilisateur (4).

9. Procédé d'évaluation selon la revendication 8, dans lequel ledit seuil relatif est inférieur ou égal à 6 dB.

10. Procédé d'évaluation selon l'une quelconque des revendications précédentes, dans lequel, en fonction de la valeur d'un résultat de ladite mesure effectuée, une macro cellule de desserte (2) dudit équipement utilisateur (4) ayant effectué ladite mesure prend une décision d'un transfert intercellulaire virtuel (S10) de ladite macro cellule de desserte (2) à ladite petite cellule non active (3).

11. Procédé d'évaluation selon l'une quelconque des revendications précédentes, dans lequel ledit réseau sans fil (1) est un réseau hétérogène sans fil.

12. Réseau sans fil (1) comprenant des macro cellules (2), des petites cellules (3) et des dispositifs d'équipement utilisateur (4), comprenant en outre un second composant de réseau responsable de l'activation d'au moins une petite cellule non active (3), conçu pour évaluer si la ou les petites cellules non actives (3) doivent être activées pour servir un ou plusieurs dispositifs d'équipement utilisateur (4), ou non, en fonction d'un résultat d'une mesure donnée effectuée (S8) par ledit ou lesdits dispositifs d'équipement utilisateur (4) sur des signaux de référence transmis par la ou les petite cellule non active (3), dans lequel un premier composant de réseau ou au moins une macro cellule (2) ou une couche d'administration et de gestion d'opération du réseau sans fil est conçu pour attribuer (S2, S3, S4, S5) un ensemble de ressources à des signaux de référence transmis par la ou les petites cellules non actives (3) seulement, la ou les macro cellules (2) étant également configurées, si les mesures sont supérieures à un seuil prédéterminé, pour décider d'un transfert intercellulaire virtuel d'au moins un dispositif d'équipement utilisateur (4) à la ou aux petites cellules non actives (3), ledit transfert intercellulaire virtuel n'entraînant pas une activation de ladite petite cellule (3) ;
ledit second composant de réseau activant la petite cellule (3) et effectuant un transfert intercellulaire à cette dernière, par un équilibrage de charge dans le réseau sans fil (1), du ou des dispositifs d'équipement utilisateur (4) de la macro cellule (2) à la petite cellule activée (3) et par libération de l'ensemble de ressources dédié à la transmission des signaux de référence transmis par la petite cellule en se basant sur le transfert intercellulaire virtuel.

13. Petite cellule (3) appropriée pour un réseau sans fil (1) selon la revendication 12, appropriée pour une activation par le second composant de réseau et conçue pour transmettre, lorsqu'elle n'est pas active, les signaux de référence associés à l'ensemble de ressources pendant la mesure.
